# EUROPÄISCHE PATENTSCHRIFT

(11) **EP 2 163 496 B1**
(45) Veröffentlichungstag und Bekanntmachung des Hinweises auf die Patenterteilung: **19.09.2012**
(21) Anmeldenummer: 09010383.9
(22) Anmeldetag: 12.08.2009
(51) Int. Cl.: B65G 13/04, B65G 13/071, B65G 47/26, B65G 13/073

(54) **Rollenförderer mit gesonderter Antriebsbaugruppe**
Roller conveyor with separate drive component
Transporteur à rouleaux avec module d'entraînement séparé

(30) Priorität: 10.09.2008 DE 102008046519
(43) Veröffentlichungstag der Anmeldung: 17.03.2010
(73) Patentinhaber: Robert Bosch GmbH, 70469 Stuttgart (DE)
(72) Erfinder: Willi, Marco, 71726 Benningen am Neckar (DE); Porzer, Volker, 73666 Baltmannsweiler (DE); Buttau, Hans-Peter, 74348 Lauffen (DE); Ludwig, Peter, 72072 Tübingen (DE); Ulmer, Peter, 73660 Urbach (DE)
(74) Vertreter: Maiß, Harald

(56) Entgegenhaltungen:
- DE-A1- 4 238 294
- DE-B- 1 029 022
- US-A- 5 011 004
- US-B1- 6 367 618

## Beschreibung

Die Erfindung betrifft einen Rollenförderer gemäß dem Oberbegriff von Anspruch 1.

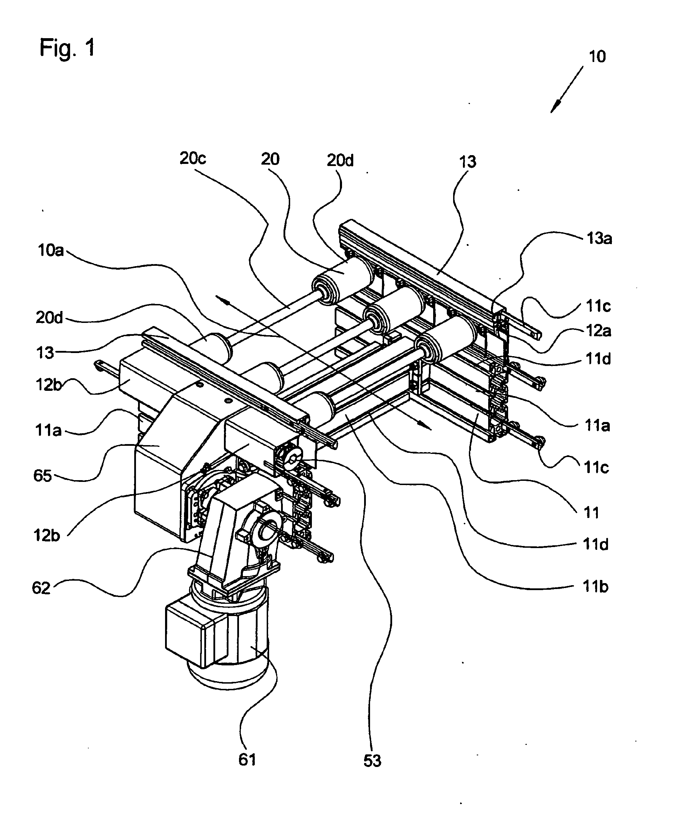

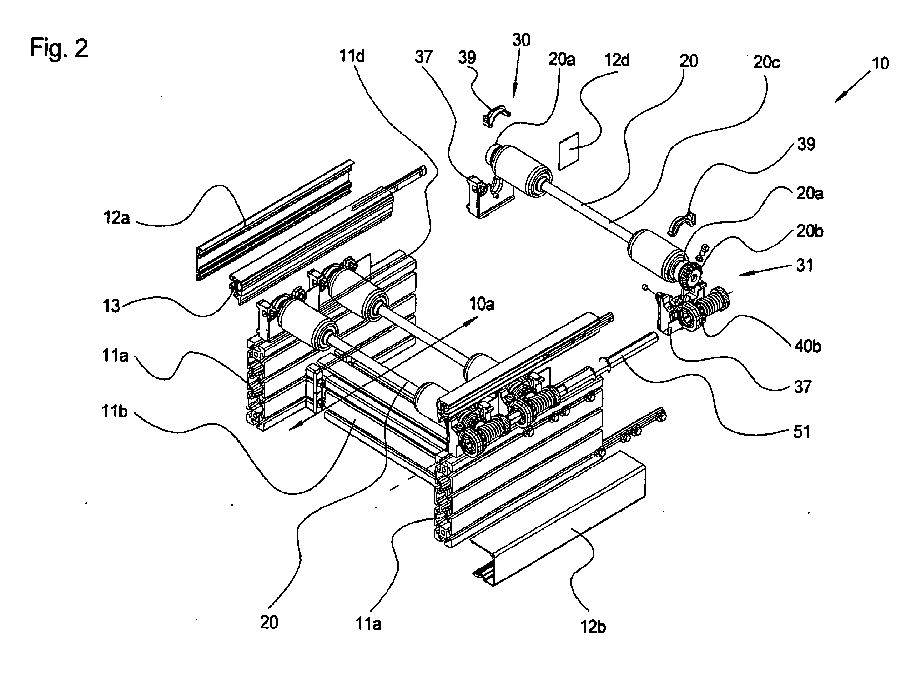

Aus der EP 129 911 B1 ist ein Rollenförderer bekannt. Gemäß der Fig. 2 der EP 129 911 B1 umfasst der Rollenförderer ein Gestell 42, an dem mehrere Förderrollen 12, die eine Förderfläche definieren über das Drehlager 46 drehbar gelagert sind. An jeder Förderrolle ist ein erstes Antriebsrad in Form eines Kegelzahnrades 18 vorgesehen, das mit einem zweiten Antriebsrad 20, das ebenfalls als Kegelzahnrad ausgeführt ist, in Drehantriebsverbindung steht. Die zweiten Antriebsräder der verschiedenen Förderrollen sind auf einer gemeinsamen Antriebswelle (Nr. 48 in Fig. 1 der EP 129 911 B1) angeordnet, die an dem Gestell mittels der Drehlager 44 drehbar gelagert ist. Weiter ist eine Rutschkupplung 30; 32; 34 vorgesehen, über welche die zweiten Antriebsräder mit der Antriebswelle in Drehantriebsverbindung stehen. Mit dieser Rutschkupplung soll erreicht werden, dass das Fördergut auch bei drehender Antriebswelle, beispielsweise mit einem Vereinzeler, angehalten werden kann, ohne dass es zu einem Schlupf zwischen Förderrolle und Fördergut kommt, der eine Beschädigung des Fördergutes zur Folge haben könnte. Stattdessen tritt der Schlupf innerhalb der Rutschkupplung auf, die von vorne herein so ausgelegt ist, dass sie dem entsprechenden Schlupf über einen langen Zeitraum Stand halten kann.

Im Rahmen der vorliegenden Anmeldung soll unter einer Rutschkupplung eine Drehmoment übertragende Kupplung verstanden werden, bei der bis zum Erreichen eines vorgegebenen Grenzdrehmoments eine im Wesentlichen schlupffreie Drehmomentübertragung stattfindet, während beim Erreichen des Grenzdrehmoments Schlupf auftritt, so dass das vorgegebene Grenzdrehmoment im Wesentlichen nie überschritten wird. Derartige Rutschkupplungen werden im einfachsten Fall, wie aus der EP 129 911 B1 bekannt, durch Ausnutzung von Reibkräften realisiert. In diesem Fall ist das zweite Antriebsrad drehbar auf der Antriebswelle aufgenommen, wobei es von einer Feder 32 gegen einen fest auf der Antriebswelle angebrachten Anschlag 24 gedrängt wird. Aus der Federkraft resultiert ein bestimmtes Grenzdrehmoment, bei dem der Übergang von Haft- zu Gleitreibung zwischen dem zweiten Antriebsrad und dem zugeordneten Anschlag stattfindet. Aus dem Stand der Technik sind auch andere Funktionsprinzipien zur Realisierung von Rutschkupplungen bekannt, beispielsweise die Ausnutzung von Magnetkräften.

Der Nachteil des Förderers der EP 129 911 B1 besteht darin, dass die Montage sehr aufwändig ist, da die Position der Anschläge für das zweite Antriebsrad sehr aufwändig eingestellt werden muss. Weiter ist es sehr umständlich, das zweite Antriebsrad nach einem Schaden oder am Ende der verschleißbedingten Lebensdauer zu wechseln, da hierfür die gesamte Antriebswellenbaugruppe demontiert und zerlegt werden muss. Bei dieser Demontage gehen auch die Einstellungen aller Grenzdrehmomente der Rutschkupplungen verloren und müssen später wieder neu eingestellt werden. Weiter ist die Drehlagerung der Antriebswelle sehr aufwändig, da an jeder Lagerstelle ein gesondertes Drehlager vorgesehen ist. Die Anzahl dieser Drehlager muss sehr groß sein, um an jeder Förderrolle einen optimalen Zahnradeingriff zu gewährleisten und damit einen geräusch- und verschleißarmen Zahnradeingriff. Ursächlich hierfür ist die hohe Biegeelastizität der vergleichsweise dünnen Antriebswelle, die bereits bei kleinen Antriebskräften zu einer Fehlstellung der Kegelzahnräder führen kann, wenn deren Abstand zu den Drehlagern groß ist.

Demgegenüber wird gemäß dem selbstständigen Anspruch vorgeschlagen, dass wenigstens ein, vorzugsweise alle, zweiten Antriebsräder und die zugeordnete Rutschkupplung zu je einer gesonderten, als Ganzes montierbaren Antriebsbaugruppe zusammengefasst sind, wobei die Antriebsbaugruppe drehbar an dem Gestell gelagert ist und wobei die Antriebswelle drehfest und vorzugsweise längsverschiebbar in der Antriebsbaugruppe aufgenommen ist. Durch die Drehlagerung der Antriebsbaugruppe unmittelbar an dem Gestell wird deren Position gegenüber der zugeordneten Förderrolle fest vorgegeben, so dass eine aufwändige Einstellprozedur zur Ausrichtung der Antriebsräder entfallen kann. Die Lagerung der Antriebsbaugruppe hat weiter zur Folge, dass in unmittelbarer Nähe jedes zweiten Antriebsrades eine Drehlagerung vorgesehen ist, so dass eine elastizitätsbedingte Fehlstellung zwischen erstem und zweitem Antriebsrad ausgeschlossen werden kann. Darüber hinaus ist es nicht erforderlich, dass die Antriebswelle selbst noch mit Drehlagern versehen wird, so dass sich deren Montage bzw. Demontage vereinfacht. Weiter kann das Grenzdrehmoment der Rutschkupplung bereits bei der Herstellung der Antriebsbaugruppe auf einen sinnvollen Wert eingestellt werden, so dass bei der späteren Montage des Förderers am Aufstellort Arbeitszeit eingespart wird. Dadurch, dass die Antriebswelle längsverschiebbar in der Antriebsbaugruppe aufgenommen ist, kann diese sehr einfach demontiert werden, indem sie aus den zugeordneten Lagerbaugruppen herausgezogen wird. Danach können alle Antriebsbaugruppen beispielsweise im Verschleißfall einfach gewechselt werden. Später muss die Antriebswelle nur wieder in die gewünschte Position innerhalb der Antriebsbaugruppen geschoben werden, ohne dass weitere Ausrichtarbeiten notwendig sind. An dieser Stelle sei darauf hingewiesen, dass die Einbauposition der Antriebswelle durchaus mit lösbaren Positioniermitteln, beispielsweise Sicherungsscheiben, gesichert sein kann. Soweit anspruchsgemäß eine Längsverschiebbarkeit gefordert wird, kommt es darauf an, dass die Antriebswelle nach dem Entfernen derartiger Positioniermittel längsverschiebbar gegenüber der Antriebsbaugruppe ist.

In den Unteransprüchen sind vorteilhafte Weiterbildungen und Verbesserungen angegeben.

Die Antriebswelle kann über ihre gesamte Länge eine im Wesentlichen konstante Querschnittsform aufweisen, die von der Kreisform abweicht, wobei die Querschnittsform vorzugsweise als Sechseck ausgeführt ist, wobei die Antriebsbaugruppe einen Durchbruch aufweist, der von der Antriebswelle durchsetzt wird, wobei der Durchbruch so an die Antriebswelle angepasst ist, dass die Antriebsbaugruppe in formschlüssiger Drehantriebsverbindung mit der Antriebswelle steht. Eine derart geformte Antriebswelle kann besonders einfach mit der notwendigen Geradheit in Form von langen Stangen serienmäßig und damit kostengünstig hergestellt werden, wobei gleichzeitig die oben genannte Längsverschiebbarkeit gewährleistet ist. Darüber hinaus lässt sich die Antriebsbaugruppe besonders einfach an die Antriebswelle anpassen, insbesondere ist die entsprechende Innenkontur besonders einfach im Kunststoffspritzgussverfahren herzustellen.

Die Antriebsbaugruppe kann eine Hülse aufweisen, deren Innenumfangsfläche den Durchbruch bildet, wobei das zweite Antriebsrad an der Außenseite der Hülse drehbar gelagert ist. Der Durchbruch der Hülse besitzt eine sehr große Kontaktfläche zur Antriebswelle, so dass bei der vorzugsweise formschlüssigen Kraftübertragung nur geringe Druckspannungen auftreten. Folglich kann die Hülse ohne Nachteil aus Kunststoff spritzgegossen werden, weshalb die Antriebsbaugruppe besonders kostengünstig ist. Darüber hinaus ist nur eine Hülse mit einer vergleichsweise geringen Wandstärke erforderlich, da durch die großflächige Anlage der Hülse an der Antriebswelle eine Verformung derselben weitgehend ausgeschlossen ist. Folglich benötigt die Antriebsbaugruppe nur sehr wenig Bauraum. Aufgrund der geringen Wanddicke wird auch das außen an der Hülse vorgesehene zweite Antriebsrad durch die Hülse nur wenig geschwächt im Vergleich zu einem unmittelbar auf der Antriebswelle angebrachten Antriebsrad.

Die Hülse kann einen, vorzugsweise einstückigen, Flansch aufweisen, wobei das zweite Antriebsrad mit geringem Abstand zum Flansch angeordnet ist. Hiermit soll verhindert werden dass sich Fremdkörper zwischen Hülse und das Zweite Antriebsrad gelangen können, die das Grenzdrehmoment der Rutschkupplung verändern würden. Vorzugsweise sind der Außendurchmesser des Flansches und des zweiten Antriebsrades im Wesentlichen gleich ausgeführt, so dass das Eindringen von Fremdkörpern weiter erschwert wird.

Zwischen dem Flansch und dem zweiten Antriebsrad kann ein gesonderter erster Gleitring vorgesehen sein, der vorzugsweise drehfest mit der Hülse verbunden ist. Mit diesem Gleitring soll eine Gleitfläche für das zweite Antriebsrad bereitgestellt werden, die eine besonders hohe Abriebfestigkeit aufweist, so dass die Antriebsbaugruppe eine lange Lebensdauer besitzt. Die Reibeigenschaften des ersten Gleitrings definieren also das Grenzdrehmoment der Rutschkupplung. Die Hülse selbst wird von einer Reibbeanspruchung verschont, so dass ihr Werkstoff primär nach Kosten- und Festigkeitsgesichtspunkten ausgewählt werden kann. Bevorzugt ist daran gedacht, die Hülse aus Polyamid (PA) zu fertigen, welches ggf. faserverstärkt ist. Der Gleitring kann beispielsweise aus Polyoxymethylen (POM) oder Sintermetall bestehen. Die drehfeste Verbindung zwischen erstem Gleitring und Hülse wird vorzugsweise mittels Formschluss hergestellt, so dass der erste Gleitring einfach montiert werden kann. Besonders bevorzugt ist daran gedacht, die im Wesentlichen kreiszylindrische Hülse mit einer Schlüsselfläche zu versehen, an die der erste Gleitring angepasst ist.

Das zweite Antriebsrad kann von einer Feder, vorzugweise einer Schraubenfeder, die die Hülse umgibt, gegen den Flansch gedrängt werden, wobei zwischen der Feder und dem zweiten Antriebsrad ein gesonderter zweiter Gleitring vorgesehen ist, der drehfest und längsverschiebbar mit der Hülse verbunden ist. Es ist bekannt, die Anpresskraft einer Rutschkupplung mittels einer Schraubenfeder zu erzeugen. Diese Feder soll die Hülse umgeben, wodurch sie sicher in ihrer Position gehalten wird, auch wenn die Antriebsbaugruppe nicht an dem Förderer montiert ist. Zu diesem Zweck umgibt bevorzugt eine Schraubenfeder eine im Wesentlichen kreiszylindrische Hülse mit geringem Abstand. Durch den zweiten Gleitring soll erreicht werden, dass sich die Feder nicht mit dem zweiten Antriebsrad mitdreht, so dass unnötiger Verschleiß an der Hülse vermieden wird. Der zweite Gleitring ist bevorzugt identisch zum ersten Gleitring ausgeführt, so dass die Herstellkosten der Gleitringe sinken. In der Folge weist der zweite Gleitring die oben genannten günstigen Gleiteigenschaften des ersten Gleitringes auf. Der zweite Gleitring definiert zusammen mit dem ersten Gleitring das Grenzdrehmoment der Rutschkupplung.

Die Feder kann an einem Anschlag abgestützt sein, der an der Hülse längsverstellbar befestigt ist. Aus dem Stand der Technik ist es bekannt, die Feder an einem Anschlag abzustützen. Dieser Anschlag soll an der Hülse längsverstellbar befestigt sein, so dass die Federspannung und damit das Grenzdrehmoment der Rutschkupplung an der gesondert vorliegenden Antriebsbaugruppe eingestellt werden kann, wobei es bei der Endmontage des Förderers regelmäßig nicht mehr verstellt werden braucht.

Der Anschlag kann ein Innengwinde aufweisen, das in ein Außengewinde an der Hülse eingreift, wobei zwischen der Feder und dem Anschlag ein dritter Gleitring vorgesehen ist, der drehfest und längsverschiebbar mit der Hülse verbunden ist. Mit dem Gewindeeingriff zwischen Hülse und Anschlag wird die Längsverstellung des Anschlags bereitgestellt. Das Gewinde ist vorzugsweise als Feingewinde ausgeführt, so dass es selbsthemmend ist. Mit dem dritten Gleitring soll verhindert werden, dass die Drehbewegung des Anschlages auf die Feder übertragen wird, wodurch diese in Drehrichtung vorgespannt würde und ein entsprechendes rückstellendes Drehmoment auf den Anschlag ausüben würde. Der dritte Gleitring ist aus Kostengründen bevorzugt identisch zum ersten und/oder zweiten Gleitring ausgeführt. Um die Einstellung des Anschlags für den Benutzer zu vereinfachen, kann an dem Anschlag eine federnde Rastnase, vorzugsweise einstückig, vorgesehen sein, durch die ein Eingriff mit der oben angesprochenen Schlüsselfläche bringbar ist. Durch diese Maßnahme erfährt der Benutzer jedes Mal, wenn die federnde Rastnase die Schlüsselfläche überstreicht eine Veränderung des Verdrehwiderstandes des Anschlages. Er erhält somit eine taktile Rückmeldung bei jeder vollständigen Drehung des Anschlages und kann somit sehr leicht bestimmten, wie weit der Anschlag noch gedreht werden muss.

Es kann eine gesonderte Lagerbaugruppe vorgesehen sein, in der die Antriebsbaugruppe drehbar gelagert ist, wobei die Lagerbaugruppe lösbar an dem Gestell befestigt ist. Durch diese Maßnahme kann die Lagerbaugruppe zusammen mit der Antriebsbaugruppe als Einheit serienmäßig vormontiert werden, wodurch deren Herstellung besonders kostengünstig ist. Gleichzeitig vereinfacht sich die Endmontage des Förderers. Bevorzugt ist daran gedacht, an der Lagerbaugruppe Ausrichtmittel vorzusehen, die in entsprechende Gegenausrichtmittel eingreifen, die an der Lagerung der zugeordneten Förderrolle vorgesehen sind, so dass sich die Montage der Lagerbaugruppe am Förderer weiter vereinfacht.

Die Antriebswelle kann mit den Antriebsbaugruppen und den gesonderten Lagerbaugruppen als Ganzes lösbar an dem Gestell befestigt sein. Hierdurch wird sichergestellt, dass alle Lagerbaugruppen innerhalb des durch die Ausricht- und die Gegenausrichtmittel vorgegebenen Ausrichtspiels so an dem Gestell befestigt werden, dass ein verspannungsfreier Eingriff mit der Antriebswelle gegeben ist. Dementsprechend treten in den Drehlagern der Antriebsbaugruppen keine Verspannungen auf, die deren Lebensdauer herabsetzen würden. Im Übrigen hat sich gezeigt, dass die gesamte oben genannte Einheit deutlich schneller montiert werden kann, als die entsprechenden Einzelteile.

Es kann wenigstens ein lösbar mit der Antriebswelle verbundenes Positioniermittel vorgesehen sein, das die Lage der Antriebswelle gegenüber einer zugeordneten Antriebsbaugruppe definiert. Mit dieser Maßnahme soll verhindert werden, dass sich die Antriebswelle beim Betrieb gegenüber den Antriebsbaugruppen verschiebt. Bevorzugt ist daran gedacht, die Antriebswelle mit schmalen Nuten zu versehen, in die Sicherungsscheiben eingeschnappt werden, die als Positioniermittel dienen, wobei die Sicherungsscheiben unmittelbar mit der Antriebsbaugruppe zur Anlage kommen. Durch die Lage der Nuten gegenüber dem Ende der Antriebswelle kann der Ort der Verbindungsstelle zu einer weiteren Antriebswelle oder zu einem Antrieb auf ein normiertes Maß festgelegt werden.

Alle Antriebsbaugruppen können identisch ausgeführt sein, damit sie serienmäßig und damit besonders kostengünstig herzustellen sind. Dies ist auf Grund der Ausführung als gesonderte Baugruppe ohne Weiteres möglich. Hinzuweisen ist darauf, dass der Abstand der Förderrollen den Aufbau einer Antriebsbaugruppe nicht beeinflusst, da jeder Antriebsbaugruppe eine eigene Drehlagerung zugeordnet ist. Die Antriebsbaugruppe muss also nur auf die eine zugeordnete Förderrolle abgestimmt werden.

Die Drehachsen der Förderrollen können senkrecht zur Drehachse der Antriebswelle ausgerichtet sein, wobei die ersten und zweiten Antriebsräder Kegelzahnräder sind. Obgleich auch andere Ausführungsformen, wie eine schräg zu den Förderrollen ausgerichtete Antriebswelle oder Reibräder anstatt der Zahnräder, denkbar sind, hat sich die obige Ausführung auch in Verbindung mit dem gesonderten Antriebsmodul als besonders vorteilhaft erwiesen. Entscheidend hierfür ist vor allem, dass sich der Antriebseingriff zwischen den beiden Kegelzahnrädern problemlos herstellen und wieder lösen lässt, so dass die Antriebsbaugruppe besonders einfach montiert werden kann.

Die Erfindung wird im Folgenden anhand der beigefügten Zeichnungen näher erläutert. Es stellt dar:

| | |
|---|---|
| Fig. 1 | eine perspektivische Ansicht eines modulartigen Abschnitts eines erfindungsgemäßen Rollenförderers, der mit einem Motor ausgestattet ist; |
| Fig. 2 | eine Explosionsansicht eines modulartigen Abschnitts eines erfindungsgemäßen Rollenförderers, der nicht mit einem Motor ausgestattet ist; |
| Fig. 3 | eine erste Explosionsansicht der zweiten und dritten Lagerbaugruppe mit der Antriebsbaugruppe; |
| Fig. 3a | eine zweite Explosionsansicht der zweiten und dritten Lagerbaugruppe mit der Antriebsbaugruppe gemäß Fig. 3; |
| Fig. 4 | eine Explosionsansicht einer Antriebsbaugruppe mit der zugeordneten dritten Lagerbaugruppe; |
| Fig. 4a | einen Querschnitt der Baugruppe gemäß Fig. 4; |
| Fig. 5 | eine perspektivische Ansicht des Aufnahmeteils; |
| Fig. 6 | eine Explosionsansicht einer zweiten Lagerbaugruppe, die mit einem dritten Antriebsrad ausgestattet ist; |
| Fig. 7 | eine Vorderansicht des Antriebsmoduls gemäß Fig. 1; und |
| Fig. 7a | einen vergrößerten Ausschnitt von Fig. 7 im Bereich der Antriebswelle. |

Fig. 1 zeigt einen modulartigen Abschnitt eines Rollerförderers 10, der dazu bestimmt weiteren ähnlichen Modulen die gesamte Förderstrecke zu bilden. Da dieses Modul mit einem Motor 61 zum Antrieb der Förderrollen 20 ausgestattet ist, wird es als Antriebsmodul bezeichnet.

Das Antriebsmodul umfasst ein Gestell 11 mit zwei parallelen Längsträgern 11a, die sich parallel zur Förderrichtung 10a erstrecken und die über einen Querträger 11b miteinander verbunden sind. Die Längsträger 11a und der Querträger 11b sind jeweils aus Aluminium stranggepresst, wobei an ihren Außenoberflächen eine Vielzahl von hinterschnittenen, T-förmigen Nuten 11d vorgesehen sind, an denen andere Bauteile in unterschiedlichen, kontinuierlich veränderlichen Positionen befestigt werden können. An den stirnseitigen Enden der Längsträger 11a sind in den hinterschnittenen Nuten mehrere Verbindungsleisten 11c aufgenommen, mit denen aneinander angrenzende Module des Rollenförderers fest miteinander verbunden werden können.

An der Oberseite der Längsträger 11a sind mehrere parallele Förderrollen 20 jeweils an beiden Enden drehbar gelagert. Die Förderrollen umfassen jeweils eine Rollenachse 20c aus Stahl, an deren beiden Endbereichen je ein Auflageabschnitt 20d mit einer kreiszylindrischen Oberfläche aus Kunststoff vorgesehen ist. Die Auflageabschnitte 20d definieren eine ebene Förderfläche, in der das Fördergut in Form eines plattenartigen (nicht dargestellten) Werkstückträgers bewegt werden kann. Seitlich wird die Förderfläche durch zwei Seitenführungsleisten 13 begrenzt, die mit einem auswechselbaren Reibbelag 13a aus Kunststoff versehen sind, an dem die Werkstückträger entlang gleiten. Die Seitenführungsleisten 13 sind ebenfalls aus Aluminium stranggepresst.

An einer Seitenfläche eines Längsträgers 11a ist ein Elektromotor 61 vorgesehen, der über ein Zahnradgetriebe 62 und einen Zahnriementrieb mit einer Antriebswelle in Drehantriebsverbindung steht. Da die Antriebswelle von einer Abdeckung 12b abgedeckt ist, ist von der Antriebswelle in Fig. 1 nur die Klauenkupplung 53 an deren Ende zu erkennen, mit der die Drehantriebsverbindung zu der Antriebswelle des angrenzenden Moduls des Rollenförderers hergestellt wird. Die Kraftübertragung von der Antriebswelle auf die Förderrollen 20 wird weiter unten noch näher erläutert. Der Zahnriementrieb ist in Fig. 1 ebenfalls nicht zu erkennen, da er aus Sicherheitsgründen von der Riemenabdeckung 65 abgedeckt ist. Hinzuweisen ist noch auf die Abdeckung 12a auf der der Antriebswelle gegenüber liegenden Seite. Die beiden Abdeckungen 12a und 12b sind jeweils aus Aluminium stranggepresst und besitzen eine im Wesentlichen U-förmige Querschnittsform, wobei sie sich nur bezüglich der Länge der U-Schenkel unterscheiden.

Fig. 2 zeigt ein weiteres Modul des erfindungsgemäßen Rollenförderers 10, das nicht mit einem Antriebsmotor ausgestattet ist. Man spricht daher auch von einem Streckenmodul. Das Streckenmodul gemäß der Fig. 2 ist bis auf den fehlenden Antrieb identisch mit dem Antriebsmodul gemäß Fig. 1 ausgeführt. Dementsprechend sind identisch ausgeführte Teile mit den gleichen Bezugsziffern versehen. Bezüglich der identischen Teile wird auf die vorstehenden Ausführungen verwiesen, um Wiederholungen zu vermeiden.

Gemäß Fig. 2 sind die Förderrollen 20 jeweils mit einem ersten Antriebsrad 20b in Form eines Kegelzahnrads ausgestattet, welches unmittelbar an der Rollenachse 20c drehfest befestigt ist. Jedem ersten Antriebsrad 20b ist ein zweites Antriebsrad 40b zugeordnet, das ebenfalls als Kegelzahnrad ausgeführt ist. Um einen geräusch- und verschleißarmen Zahnradeingriff zu gewährleisten, besteht das erste Antriebsrad 20b aus Polyoxymethylen (POM), während das zweite Antriebsrad 40b aus Polyamid (PA) oder Sintermetall besteht oder umgekehrt. Alle zweiten Antriebsräder 40b sind auf einer gemeinsamen Antriebswelle 51 angeordnet, die die gleiche Länge aufweist wie das zugeordnete Modul des Rollenförderers 10. Auf den Drehantriebseingriff zwischen den zweiten Antriebsrädern 40b und der Antriebswelle 51 wird weiter unten noch näher eingegangen. Die Antriebswelle 51 ist genau senkrecht zu den zugeordneten parallelen Förderrollen 20 ausgerichtet, wobei sich deren Drehachsen jeweils in einem Punkt schneiden.

Die Drehlagerung der Förderrollen 20 wird dadurch bewerkstelligt, dass an beiden Endbereichen der Förderrolle 20 auf der Rollenachse 20c jeweils ein Drehlager 20a in Form eines Radialrillenkugellagers vorgesehen ist, das mit einer Lebensdauerschmierung versehen ist. Die Drehlager 20a sind jeweils in einem gesonderten Aufnahmeteil 37 aufgenommen, das an einer hinterschnittenen Nut 11d des Längsträgers 11a in jeder beliebigen Stellung bezüglich der Förderrichtung 10a befestigt werden kann. Die beiden Aufnahmeteile 37, die einer Förderrolle 20 zugeordnet sind, sind jeweils identisch ausgeführt und um 180° gedreht zueinander angeordnet. Zwischen zwei benachbarten Aufnahmeteilen 37 ist jeweils ein plattenartiges Verschlussteil 12d vorgesehen, so dass die Aufnahmeteile 37 mit den zugeordneten Verschlussteilen 12d eine geschlossene Wand bilden, die jeweils gemeinsam mit den Abdeckungen 12a oder 12b einen im Wesentlichen vollständig abgeschlossenen Raum umschließen, in dem die zugeordneten Lagerungs- und Antriebskomponenten geschützt vor Umgebungseinflüssen aufgenommen sind.

Hinzuweisen ist noch darauf, dass die zweite Lagerbaugruppe 31 von dem Aufnahmeteil 37 auf der Seite der Antriebswelle 51, dem zugeordneten Drehlager 20a und dem entsprechenden Halteteil 39 gebildet wird. Die erste Lagerbaugruppe 30 wird von den entsprechenden Teilen auf der gegenüber liegenden Seite der Förderrolle 20 gebildet.

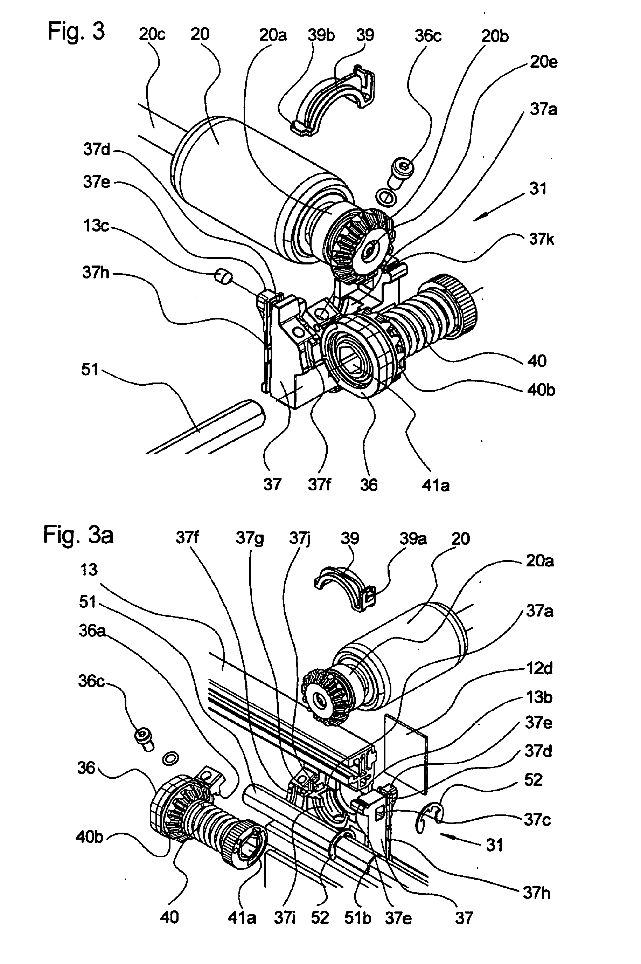

Fig. 3 zeigt einen vergrößerten Ausschnitt von Fig. 2 mit der zweiten Lagerbaugruppe 31, der dritten Lagerbaugruppe 36 und der Antriebsbaugruppe 40. Fig. 3a zeigt die gleiche Anordnung aus einer anderen Blickrichtung.

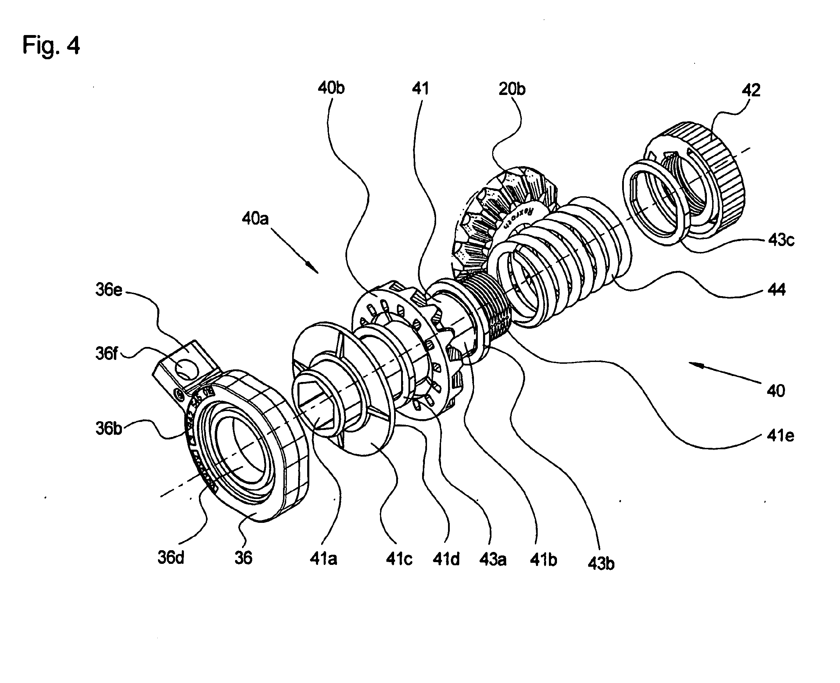

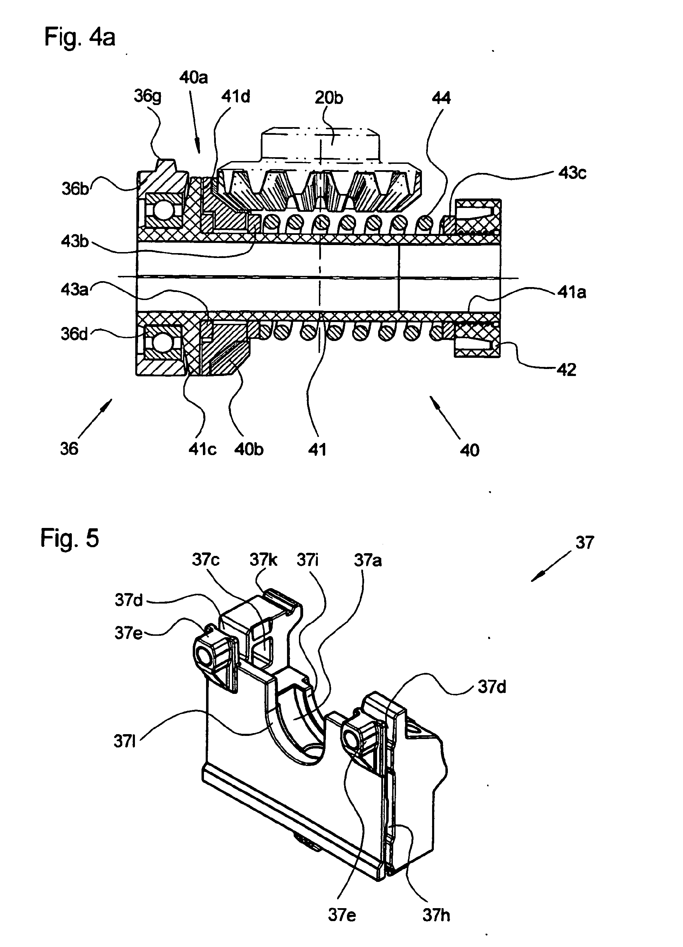

Die Antriebsbaugruppe 40 mit dem zweiten Antriebsrad 40b ist über die dritte Lagerbaugruppe 36 lösbar mit dem Aufnahmeteil 37 der zweiten Lagerbaugruppe 31 verbunden, wobei die genannten Baugruppen über den Schraubbolzen 36c aneinander befestigt sind. An dem Aufnahmeteil 37 ist eine Nut 37f vorgesehen, in die ein angepasster Ausrichtfortsatz (Nr. 36g in Fig. 4a) an der dritten Lagerbaugruppe 36 zum Zwecke der gegenseitigen Ausrichtung eingreift. Die Nut 37f verläuft kreisförmig gebogen um die Drehachse der Antriebswelle 51 herum, damit die dritte Lagerbaugruppe 36 frei um die genannte Drehachse gedreht werden kann, auch wenn sich die Antriebswelle 51 bereits in ihrer Einbauposition befindet. An der dritten Lagerbaugruppe 36 ist ein Haken 36a vorgesehen, der in eine angepasste Ausnehmung 37g an dem Aufnahmeteil 37 eingehakt werden kann. Bei der Montage des Rollenförderers werden dementsprechend zuerst die dritten Lagerbaugruppen 36 mit den zugeordneten Antriebsbaugruppen 40 auf die Antriebswelle 51 aufgeschoben, so dass sich eine Antriebswellenbaugruppe ergibt. Die Antriebsbaugruppe ist hierfür mit einem sechseckigen Durchbruch 41a versehen, der so an die sechseckige Querschnittsform der Antriebswelle 51 angepasst ist, dass einerseits eine formschlüssige Drehantriebsverbindung und gleichzeitig die gewünschte Längsverschiebbarkeit zwischen der Antriebsbaugruppe 40 und der Antriebswelle 51 gegeben ist. Die genannte Antriebswellenbaugruppe wird nun mit Hilfe der Haken 36a in die entsprechenden Aufnahmeteile 37 eingehakt, so dass sie in der gewünschten Endbauposition gehalten ist. Normalerweise ist es ausreichend, nur zwei bezüglich der Antriebswelle 51 endseitige Haken 36a einzuhaken, damit ein ausreichender Halt vorhanden ist. Die dritten Lagerbaugruppen 36 können nun um die Drehachse der Antriebswelle 51 herum in ihre Einbaulage gedreht und mit den zugeordneten Aufnahmeteilen 37 verschraubt werden. Nach dem Abschluss dieser Arbeit wird die Lage der Antriebswelle, die bezüglich der Antriebsbaugruppe 40 längsverschiebbar ist, mit Positioniermitteln in Form von zwei Sicherungsscheiben 52 gesichert. Die Sicherungsscheiben 52 werden hierfür in entsprechende Nuten 51b eingeschnappt, die an der Antriebswelle 51 vorgesehen sind, wobei die Antriebswelle 51 mit einer Vielzahl derartiger Nuten, deren Lage an die vorgegebenen Abstandsmaße der Förderrollen 20 angepasst sind, ausgestattet ist.

In Fig. 3 und 3a sind weiter die Nuten 37h zur Aufnahme der plattenartigen Verschlussteile 12d zu erkennen. Weiter sind die Aufnahmenuten 37d zur Aufnahme des Befestigungssteges 13b der Seitenführung 13 zu erkennen, die an den Stirnseiten der U-Schenkel des insgesamt U-förmigen Aufnahmeteils 37 vorgesehen sind. Die Seitenführung 13 wird in diesen Aufnahmenuten 37d mit Hilfe der Gewindestifte 13c gesichert. Der zugeordnete Innengewindeabschnitt am Aufnahmeteil 37 dient gleichzeitig als Gegenrastmittel 37e für entsprechende Rastmittel an (nicht dargestellten) Abdeckungen zwischen den Förderrollen 20. Hinzuweisen ist noch auf die Rastnasen 37k für die seitlichen Abdeckungen (Nr. 12a und 12b in Fig. 2). Das Aufnahmeteil 37 ist aus Aluminium im Druckgussverfahren hergestellt, um die vielen Befestigungskonturen kostengünstig bereitstellen zu können.

In Fig. 3 und Fig. 3a ist weiter die Aufnahmeausnehmung 37a des Aufnahmeteils 37 zur Aufnahme der Drehlager 20a an der Förderrolle 20 zu erkennen. Die Aufnahmausnehmung 37a ist beidseitig mit Borden 37i versehen, die eine Verschiebung des Drehlagers in Richtung der Drehachse der zugeordneten Förderrolle 20 verhindern. Die Öffnung der Aufnahmeausnehmung 37a wird von einem Halteteil 39 aus Kunststoff verschlossen, das die angesprochenen Aufnahmekonturen für das Drehlager 20a an dem Aufnahmeteil 37 zur vollen Kreisform fortsetzt. Das Halteteil ist mit einem elastischen Schnapphaken 39a versehen, der in einen angepassten Durchbruch 37c eingeschnappt wird. An der gegenüberliegenden Seite ist das Halteteil 39 mit einem im Wesentlichen starren Haltefortsatz 39b versehen, der in eine angepasste Ausnehmung 37j so eingreift, dass das Halteteil 39 bezüglich des Aufnahmeteils 37 um wenigstens 30° verkippt werden kann, wodurch eine einfache Montage des Halteteils 39 ermöglicht wird. Das erste Antriebsrad 20b ist an der Rollenachse 20c mit einer Befestigungsschraube 20e befestigt, wobei an der Stirnseite der Rollenachse 20c zwei (nicht sichtbare) Schlüsselflächen vorgesehen sind, die einen formschlüssigen Eingriff zwischen dem ersten Antriebsrad 20b und der zugeordneten Rollenachse 20c herstellen

Fig. 4 zeigt eine Explosionsansicht der Antriebsbaugruppe 40 mit der zugeordneten dritten Lagerbaugruppe 36. Fig. 4a zeigt die genannten Baugruppen im Querschnitt.

Die dritte Lagerbaugruppe 36 umfasst ein Basisbauteil 36b aus Aluminium-Druckguss, in das ein Lebensdauer geschmiertes Radialrillenkugellager 36d als Drehlager für die Antriebsbaugruppe 40 eingebaut ist. An dem Basisbauteil 36b ist ein Befestigungsfortsatz 36e mit einer Befestigungsbohrung 36f für den oben genannten Schraubbolzen (Nr. 36c in Fig. 3). Hinzuweisen ist noch auf den in Fig. 4a sichtbaren Ausrichtfortsatz 36g, der in die Nut (Nr. 37f in Fig. 3) des Aufnahmeteils eingreift.

Die Antriebsbaugruppe 40 umfasst eine im Wesentlichen kreiszylindrische Hülse 41, die aus faserverstärktem Polyamid spritzgegossen ist. An der Innenseite der Hülse ist ein Durchbruch 41a mit einem sechseckigen Querschnitt vorgesehen, der so an die Antriebswelle angepasst ist, dass die Hülse 41 in Längsrichtung auf dieser verschiebbar ist, wobei gleichzeitig eine formschlüssige Drehantriebsverbindung gegeben ist. An der Außenumfangsfläche der Hülse 41 ist ein Flansch 41c einstückig vorgesehen, zu dessen in Fig. 4 linken Seite das Drehlager 36d auf der Hülse 41 so montiert ist, dass die Antriebsbaugruppe 40 als Ganzes in die dritte Lagerbaugruppe 36 eingebaut werden kann. Die in Fig. 4 rechte Seitenfläche des Flansches dient als Reibfläche 41d für das zweite Antriebsrad 40b, das gleitend an dieser anliegt, wobei es von der Schraubenfeder 44 gegen diese vorgespannt wird, so dass eine Rutschkupplung 40a gebildet wird. An der Außenumfangsfläche der Hülse 41 sind insgesamt drei identische Gleitringe 43a; 43b und 43c aus Polyoxymethylen (POM) oder Sintermetall vorgesehen, die über zwei gegenüberliegende Schlüsselflächen 41b drehfest und längsverschiebbar an der Hülse 41 gehalten sind. Der erste Gleitring 43a dient primär als Radiallager für das gegenüber der Hülse 41 drehbewegliche zweite Antriebsrad 40b. Mit dem zweiten Gleitring 43b soll verhindert werden, dass die Feder 44 von dem drehenden zweiten Antriebsrad 40b mitgenommen wird, so dass sie gegenüber der Hülse 41 immer still steht. Mit dem dritten Gleitring 43c wird verhindert, dass eine Drehbewegung des Anschlages 42 auf die Feder 44 übertragen wird. Der Anschlag 42 steht in Schraubeingriff mit einem Außengewinde 41e an der Hülse 41, so dass er durch Verdrehen in Längsrichtung gegenüber der Hülse 41 verlagert werden kann, wodurch die Feder 44 gegen das zweite Antriebsrad 40b vorgespannt wird. Das Außengewinde 41e ist ein Feingewinde, so dass es selbsthemmend ist, damit sich der Anschlag 42 nicht von selbst löst.

Fig. 5 zeigt eine perspektivische Ansicht des Aufnahmeteils 37 aus der gegenüber Fig.3 und 3a entgegen gesetzten Richtung. Hinzuweisen ist an dieser Stelle nur auf die U-förmige Ausnehmung 371, die an die Achse der Förderrolle mit einem geringen Abstand angepasst ist, so dass das dahinter angeordnete Drehlager gut vor Umgebungseinflüssen geschützt ist. Im Übrigen wird auf die Ausführung zu Fig. 3 und 3a verwiesen, um Wiederholungen zu vermeiden.

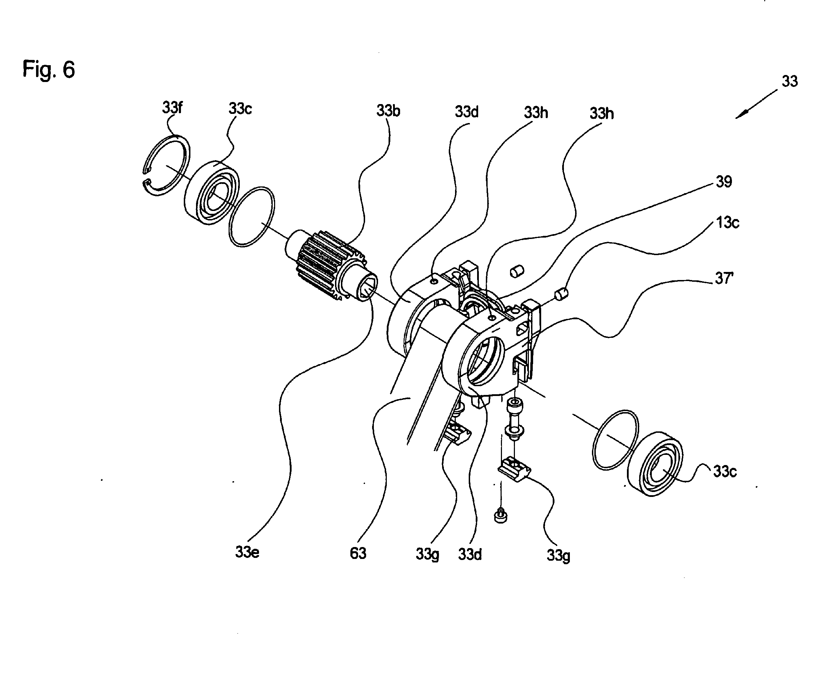

Fig. 6 zeigt eine zweite Lagerbaugruppe 33, die mit einem dritten Antriebsrad 33b ausgestattet ist. Hinsichtlich der Lagerung der (nicht dargestellten) Förderrolle und der Befestigung der angrenzenden Bauteile ist diese Lagerbaugruppe 33 genauso ausgeführt wie die zweite Lagerbaugruppe (Nr. 31 in Fig. 3 und Fig. 3a), die nicht mit einem dritten Antriebsrad versehen ist, so dass in dieser Hinsicht auf die vorstehenden Ausführungen verwiesen wird.

Das dritte Antriebsrad 33b dient zum Antrieb der Antriebswelle (Nr. 51 in Fig. 2). Es ist hierfür über ein Zugmittel 63 in Form eines Zahnriemens mit einem (nicht dargestellten) Elektromotor verbunden. Die Drehantriebsverbindung zur Antriebswelle wird wie bei der Antriebsbaugruppe (Nr. 40 in Fig. 4) über einen sechseckigen Durchbruch 33e im dritten Antriebsrad 33b hergestellt, so dass das dritte Antriebsrad 33b per Formschluss drehfest mit der Antriebswelle verbunden ist, wobei die Antriebswelle gleichzeitig zwecks deren einfacher Montage längsverschiebbar bezüglich dem dritten Antriebsrad 33b ist.

Das dritte Antriebsrad 33b ist in gerader Verlängerung der Förderrolle in dem Bereich angeordnet, an dem sich normalerweise das zweite Antriebsrad befindet. An dem Aufnahmeteil 37 sind hierfür zwei Lagerflansche 33d einstückig vorgesehen. In beiden Lagerflanschen 33d ist je ein Drehlager 33c in Form eines Lebensdauer geschmierten Radialrillenkugellagers aufgenommen, in dem das dritte Antriebsrad 33b und mithin die Antriebswelle drehbar gelagert sind. Die beidseitige Lagerung des dritten Antriebsrades 33b ist notwendig, damit die Drehlagerung den Zugkräften aufgrund der Spannung des Zahnriemens 63 über einen genügend langen Zeitraum stand hält. Die Baugruppe, bestehend aus dem dritten Antriebsrad 33b und den beiden zugeordneten Drehlagern 33c wird mit dem Sicherungsring 33f in der zweiten Lagerbaugruppe 33 gehalten. Mit den beiden Nutensteinen 33g wird die zweite Lagerbaugruppe 33 an den hinterschnittenen Nuten des zugeordneten Längsträgers befestigt. Die beiden Befestigungsgewinde 33h dienen zur Befestigung der Riemenabdeckung (Nr. 65 in Fig. 1).

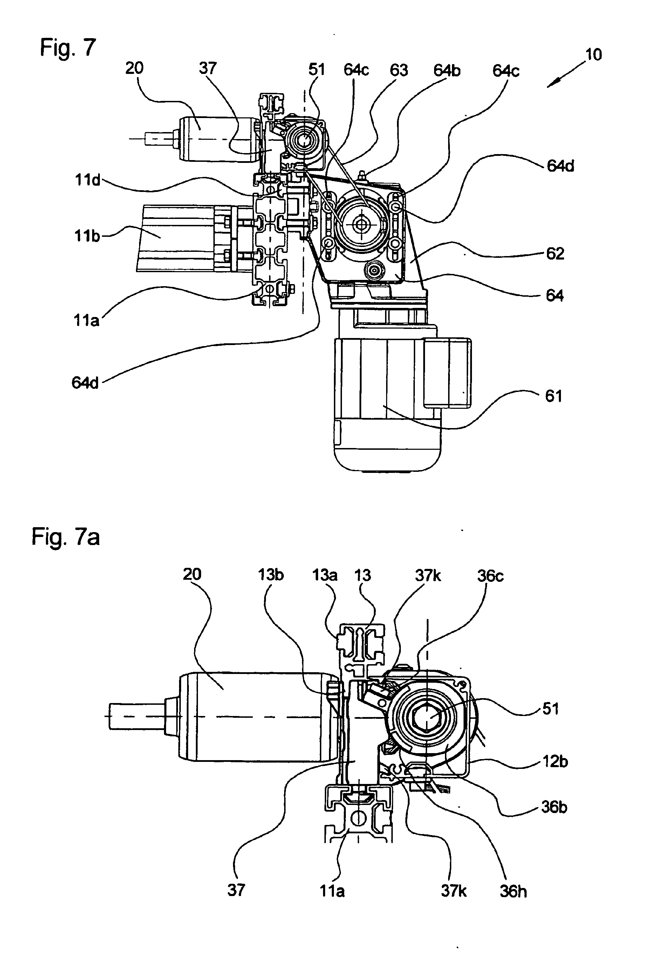

Fig. 7 zeigt eine Vorderansicht des Antriebsmoduls gemäß Fig. 1, wobei die Riemenabdeckung (Nr. 65 in Fig. 1) entfernt wurde. Zu erkennen ist der Motorflansch 64, mit dem der Elektromotor 61 einschließlich des Getriebes 62 an den hinterschnittenen Nuten 11d des Längsträgers 11a befestigt sind. Zur Festlegung der Lage des Motorflansches 64 am Längsträger 11a wird dieser solange in Förderrichtung verschoben, bis er am Aufnahmeteil 37 der zugeordneten zweiten Lagerbaugruppe anstößt. Die genannten Bauteile und der Motor 61 sind so aufeinander abgestimmt, dass der Zahnriemen 63 in dieser Stellung exakt senkrecht zur Drehachse der Antriebswelle 51 ausgerichtet ist. Der Motorflansch 64 ist mit zwei Langlöchern 64c ausgestattet, so dass der Motor 61 in unterschiedlichen Positionen am Motorflansch 64 befestigt werden kann. Mit Hilfe der Einstellschraube 64b wird der Motor 61 in die Position verschoben, in der der Zahnriemen 63 die geeignete Spannung aufweist. Sodann wird der Motor 61 mit den Befestigungsschrauben 64d an dem Motorflansch 64 fest geschraubt.

Fig. 7a zeigt einen vergrößerten Ausschnitt von Fig. 7 im Bereich der sechseckigen Antriebswelle 51. Dieser Ansicht ist insbesondere zu entnehmen, wie die U-förmige Abdeckung 12b in die zugeordneten Rastnasen 37k am Aufnahmeteil 37 eingeschnappt ist. Weiter ist die Seitenführungsleiste 13 mit dem darin aufgenommenen Reibbelag 13a zu erkennen, der etwas über die Seitenführungsleiste 13 über steht, so dass der zugeordnete (nicht dargestellte) Werkstückträger nur mit dem Reibbelag 13a in Gleitkontakt steht. Darüber hinaus ist dargestellt, wie die Seitenführungsleiste 13 mit ihrem Befestigungssteg 13b in das Aufnahmeteil 37 eingesetzt ist. Hinzuweisen ist außerdem auf das Basisbauteil 36b mit seiner zur Antriebswelle 51 konzentrischen Außenumfangsfläche 36h, die es ermöglicht, die dritte Lagerbaugruppe bei entferntem Schraubbolzen 36c gegenüber der Antriebswelle 51 zu verdrehen, wobei die Außenumfangsfläche 36h gleichzeitig als Anlagefläche zum Aufnahmeteil 37 dient.

### Bezugszeichenliste

- 10: Rollenförderer
- 10a: Förderrichtung

- 11: Gestell
- 11a: Längsträger
- 11b: Querträger
- 11c: Verbindungsleiste
- 11d: hinterschnittene Nut

- 12a: U-förmige Abdeckung (passive Seite)
- 12b: U-förmige Abdeckung (Antriebsseite)
- 12d: plattenartiges Verschlussteil

- 13: Seitenführungsleiste
- 13a: Reibbelag
- 13b: Befestigungssteg
- 13c: Gewindestift

- 20: Förderrolle
- 20a: Drehlager
- 20b: erstes Antriebsrad
- 20c: Rollenachse
- 20d: Auflageabschnitte
- 20e: Befestigungsschraube

- 30: erste Lagerbaugruppe
- 31: zweite Lagerbaugruppe

- 33: zweite Lagerbaugruppe mit drittem Antriebsrad
- 33b: drittes Antriebsrad
- 33c: Drehlager für drittes Antriebsrad
- 33d: Lagerflansch
- 33e: Durchbruch
- 33f: Sicherungsring
- 33g: Nutensteine
- 33h: Befestigungsgewinde für Riemenabdeckung

- 36: dritte Lagerbaugruppe
- 36a: Haken
- 36b: Basisbauteil
- 36c: Schraubbolzen
- 36d: Drehlager
- 36e: Befestigungsfortsatz
- 36f: Befestigungsbohrung
- 36g: Ausrichtfortsatz
- 36h: Außenumfangsfläche

- 37: Aufnahmeteil
- 37a: Aufnahmausnehmung
- 37c: Durchbruch für Schnapphaken
- 37d: Aufnahmenut für die Seitenführungsleiste
- 37e: Halte-/Rastmittel für eine Abdeckung zwischen den Rollen
- 37f: Ausrichtnut für dritte Lagerbaugruppe
- 37g: Ausnehmung für Haken
- 37h: Aufnahmenut für plattenartiges Verschlussteil
- 37i: Bord für Drehlager
- 37j: Aufnahmeausnehmung für Haltefortsatz am Halteteil
- 37k: Rastnase für die seitlichen Abdeckungen
- 371: Ausnehmung für Rollenachse

- 39: Halteteil
- 39a: Schnapphaken
- 39b: Haltefortsatz

- 40: Antriebsbaugruppe
- 40a: Rutschkupplung
- 40b: zweites Antriebsrad
- 41: Hülse
- 41a: Durchbruch
- 41b: Schlüsselfläche
- 41c: Flansch
- 41 d: Reibfläche
- 41 e: Außengewinde
- 42: Anschlag
- 43a: erster Gleitring
- 43b: zweiter Gleitring
- 43c: dritter Gleitring
- 44: Feder

- 51: Antriebswelle
- 51b: Nut für Sicherungsscheibe
- 52: Sicherungsscheibe
- 53: Klauenkupplung

- 61: Motor
- 62: Getriebe
- 63: Zugmittel
- 64: Motorflansch
- 64b: Einstellschraube
- 64c: Langlöcher
- 64d: Befestigungsschraube
- 65: Riemenabdeckung

## Patentansprüche

1. Rollenförderer (10) mit einem Gestell (11), an dem mehrere Förderrollen (20), die eine Förderfläche definieren, drehbar gelagert sind, wobei wenigstens ein Teil der Förderrollen (20) je ein erstes Antriebsrad (20b) aufweist, das mit je einem zweiten Antriebsrad (40b) in Drehantriebsverbindung steht, wobei die zweiten Antriebsräder (40b) auf einer drehbaren Antriebswelle (51) angeordnet sind, mit der sie über je eine Rutschkupplung (40a) in Drehantriebsverbindung stehen,
**dadurch gekennzeichnet, dass** wenigstens ein, vorzugsweise alle, zweiten Antriebsräder (40b) und die zugeordnete Rutschkupplung (40a) zu je einer gesonderten, als Ganzes montierbaren Antriebsbaugruppe (40) zusammengefasst sind, wobei die Antriebsbaugruppe (40) drehbar an dem Gestell (11) gelagert ist und wobei die Antriebswelle (51) drehfest und vorzugsweise längsverschiebbar in der Antriebsbaugruppe (40) aufgenommen ist.

2. Rollenförderer nach Anspruch 1,
**dadurch gekennzeichnet, dass** die Antriebswelle (51) über ihre gesamte Länge eine im Wesentlichen konstante Querschnittsform aufweist, die von der Kreisform abweicht, wobei die Querschnittsform vorzugsweise als Sechseck ausgeführt ist, wobei die Antriebsbaugruppe (40) einen Durchbruch (41 a) aufweist, der von der Antriebswelle durchsetzt wird, wobei der Durchbruch (41a) so an die Antriebswelle (51) angepasst ist, dass die Antriebsbaugruppe (40) in formschlüssiger Drehantriebsverbindung mit der Antriebswelle (51) steht.

3. Rollenförderer nach Anspruch 2,
**dadurch gekennzeichnet, dass** die Antriebsbaugruppe (40) eine Hülse (41) aufweist, deren Innenumfangsfläche den Durchbruch (41 a) bildet, wobei das zweite Antriebsrad (40b) an der Außenseite der Hülse (41) drehbar gelagert ist.

4. Rollenförderer nach Anspruch 3,
**dadurch gekennzeichnet, dass** die Hülse (41) einen, vorzugsweise einstückigen, Flansch (41 c) aufweist, an dem das zweite Antriebsrad (40b) wenigstens mittelbar abgestützt ist.

5. Rollenförderer nach Anspruch 4,
**dadurch gekennzeichnet, dass** zwischen dem Flansch (41c) und dem zweiten Antriebsrad (40b) ein gesonderter erster Gleitring (43a) vorgesehen ist, der vorzugsweise drehfest mit der Hülse (41) verbunden ist.

6. Rollenförderer nach Anspruch 5,
**dadurch gekennzeichnet, dass** das zweite Antriebsrad (40b) von einer Feder (44), vorzugweise einer Schraubenfeder, die die Hülse (41) umgibt, gegen den Flansch (41 c) gedrängt wird, wobei zwischen der Feder (44) und dem zweiten Antriebsrad (40b) ein gesonderter zweiter Gleitring (43b) vorgesehen ist, der drehfest und längsverschiebbar mit der Hülse (41) verbunden ist.

7. Rollenförderer nach Anspruch 6,
**dadurch gekennzeichnet, dass** die Feder (44) an einem Anschlag (42) abgestützt ist, der an der Hülse (41) längsverstellbar befestigt ist.

8. Rollenförderer nach Anspruch 7,
**dadurch gekennzeichnet, dass** der Anschlag (42) ein Innengewinde aufweist, das in ein Außengewinde (41 e) an der Hülse (41) eingreift, wobei zwischen der Feder (44) und dem Anschlag (42) ein dritter Gleitring (43c) vorgesehen ist, der drehfest und längsverschiebbar mit der Hülse (41) verbunden ist.

9. Rollenförderer nach einem der Ansprüche 5, 6 oder 8,
**dadurch gekennzeichnet, dass** der erste Gleitring (43a) und/oder der zweite Gleitring (43b) und/oder der dritte Gleitring (43c) identisch ausgeführt sind.

10. Rollenförderer nach einem der vorstehenden Ansprüche,
**dadurch gekennzeichnet, dass** eine gesonderte Lagerbaugruppe (36) vorgesehen ist, in der die Antriebsbaugruppe (40) drehbar gelagert ist, wobei die Lagerbaugruppe lösbar an dem Gestell (11) befestigt ist.

11. Rollenförderer nach Anspruch 10,
**dadurch gekennzeichnet, dass** die Antriebswelle (51) mit den Antriebsbaugruppen (40) und den gesonderten Lagerbaugruppen als Ganzes lösbar an dem Gestell (11) befestigt ist.

12. Rollenförderer nach einem der vorstehenden Ansprüche,
**dadurch gekennzeichnet, dass** wenigstens ein lösbar mit der Antriebswelle (51) verbundenes Positioniermittel (52) vorgesehen ist, das die Lage der Antriebswelle (51) gegenüber einer zugeordneten Antriebsbaugruppe (40) definiert.

13. Rollenförderer nach einem der vorstehenden Ansprüche,
**dadurch gekennzeichnet, dass** alle Antriebsbaugruppen (40) identisch ausgeführt sind.

14. Rollenförderer nach einem der vorstehenden Ansprüche,
**dadurch gekennzeichnet, dass** die Drehachsen der Förderrollen (20) senkrecht zur Drehachse der Antriebswelle (51) ausgerichtet sind, wobei die ersten und zweiten Antriebsräder (20b; 40b) Kegelzahnräder sind.

## Claims

1. Roller conveyor (10) having a frame (11) on which a plurality of conveying rollers (20), which define a conveying surface, are mounted in a rotatable manner, wherein at least a part of the conveying rollers (20) has a respective first drive wheel (20b) which is in rotary driving connection with a second drive wheel (40b), wherein the second drive wheels (40b) are arranged on a rotatable drive shaft (51) with which they are in rotary driving connection via a respective slip clutch (40a),
**characterized in that** at least one and preferably all of the second drive wheels (40b) and the associated slip clutch (40a) can be combined to form a respective separate drive subassembly (40) that is mountable as a whole, wherein the drive subassembly (40) is mounted in a rotatable manner on the frame (11) and wherein the drive shaft (51) is received in a rotationally fixed and preferably longitudinally displaceable manner in the drive subassembly (40).

2. Roller conveyor according to Claim 1,
**characterized in that** the drive shaft (51) has, along its entire length, a substantially constant cross-sectional shape, which deviates from the circular shape, wherein the cross-sectional shape is configured preferably as a hexagon, wherein the drive subassembly (40) has a through-passage (41a) through which the drive shaft passes, wherein the through-passage (41a) is matched to the drive shaft (51) such that the drive subassembly (40) is in form-fitting rotary driving connection with the drive shaft (51).

3. Roller conveyor according to Claim 2,
**characterized in that** the drive subassembly (40) has a sleeve (41), the inner circumferential surface of which forms the through-passage (41a), wherein the second drive wheel (40b) is mounted in a rotatable manner on the outer side of the sleeve (41).

4. Roller conveyor according to Claim 3,
**characterized in that** the sleeve (41) has a, preferably integral, flange (41c) on which the second drive wheel (40b) is supported at least indirectly.

5. Roller conveyor according to Claim 4,
**characterized in that** between the flange (41c) and the second drive wheel (40b) there is provided a separate first slip ring (43a) which is connected to the sleeve (41) preferably in a rotationally fixed manner.

6. Roller conveyor according to Claim 5,
**characterized in that** the second drive wheel (40b) is urged against the flange (41c) by a spring (44), preferably a helical spring which surrounds the sleeve (41), wherein between the spring (44) and the second drive wheel (40b) there is provided a separate second slip ring (43b) which is connected to the sleeve (41) in a rotationally fixed and longitudinally displaceable manner.

7. Roller conveyor according to Claim 6, **characterized in that** the spring (44) is supported on a stop (42) which is fastened to the sleeve (41) in a longitudinally adjustable manner.

8. Roller conveyor according to Claim 7,
**characterized in that** the stop (42) has an internal thread which engages in an external thread (41e) on the sleeve (41), wherein between the spring (44) and the stop (42) there is provided a third slip ring (43c) which is connected to the sleeve (41) in a rotationally fixed and longitudinally displaceable manner.

9. Roller conveyor according to one of Claims 5, 6 and 8,
**characterized in that** the first slip ring (43a) and/or the second slip ring (43b) and/or the third slip ring (43c) are configured in an identical manner.

10. Roller conveyor according to one of the preceding claims,
**characterized in that** there is provided a separate bearing subassembly (36) in which the drive subassembly (40) is mounted in a rotatable manner, wherein the bearing subassembly is fastened releasably to the frame (11).

11. Roller conveyor according to Claim 10,
**characterized in that** the drive shaft (51) with the drive subassemblies (40) and the separate bearing subassemblies is fastened releasably as a whole to the frame (11).

12. Roller conveyor according to one of the preceding claims,
**characterized in that** there is provided at least one positioning means (52) which is connected releasably to the drive shaft (51) and defines the position of the drive shaft (51) with respect to an associated drive subassembly (40).

13. Roller conveyor according to one of the preceding claims,
**characterized in that** all of the drive subassemblies (40) are configured in an identical manner.

14. Roller conveyor according to one of the preceding claims,
**characterized in that** the rotation axes of the conveying rollers (20) are oriented perpendicularly to the rotation axis of the drive shaft (51), wherein the first and second drive wheels (20b, 40b) are bevel gears.

## Revendications

1. Transporteur à rouleaux (10) comprenant un bâti (11), sur lequel sont montés de manière rotative plusieurs rouleaux de transport (20) qui définissent une surface de transport, au moins une partie des rouleaux de transport (20) présentant à chaque fois une première roue d'entraînement (20b) qui est en liaison d'entraînement en rotation avec une deuxième roue d'entraînement respective (40b), les deuxièmes roues d'entraînement (40b) étant disposées sur un arbre d'entraînement rotatif (51) avec lequel elles sont en liaison d'entraînement en rotation par le biais d'un embrayage à glissement respectif (40a),
**caractérisé en ce qu'**au moins une, de préférence toutes les deuxièmes roues d'entraînement (40b) et l'embrayage à glissement associé (40a) sont réunis pour former un module d'entraînement (40) respectif séparé, pouvant être monté en tant que tout, le module d'entraînement (40) étant monté de manière rotative sur le bâti (11) et l'arbre d'entraînement (51) étant reçu de manière solidaire en rotation et de préférence déplaçable longitudinalement dans le module d'entraînement (40).

2. Transporteur à rouleaux selon la revendication 1, **caractérisé en ce que** l'arbre d'entraînement (51) présente sur toute sa longueur une forme en section transversale essentiellement constante qui s'écarte de la forme circulaire, la forme en section transversale étant réalisée de préférence sous forme d'hexagone, le module d'entraînement (40) présentant un orifice (41a) à travers lequel passe l'arbre d'entraînement, l'orifice (41a) étant adapté à l'arbre d'entraînement (51) de telle sorte que le module d'entraînement (40) soit en liaison d'entraînement en rotation par engagement par correspondance géométrique avec l'arbre d'entraînement (51).

3. Transporteur à rouleaux selon la revendication 2, **caractérisé en ce que** le module d'entraînement (40) présente une douille (41) dont la surface périphérique interne forme l'orifice (41a), la deuxième roue d'entraînement (40b) étant montée à rotation sur le côté extérieur de la douille (41).

4. Transporteur à rouleaux selon la revendication 3, **caractérisé en ce que** la douille (41) présente une bride (41c), de préférence d'une seule pièce, sur laquelle la deuxième roue d'entraînement (40b) est supportée au moins indirectement.

5. Transporteur à rouleaux selon la revendication 4, **caractérisé en ce qu'**entre la bride (41c) et la deuxième roue d'entraînement (40b) est prévue une première bague de glissement séparée (43a), qui est connectée de préférence de manière solidaire en rotation à la douille (41).

6. Transporteur à rouleaux selon la revendication 5, **caractérisé en ce que** la deuxième roue d'entraînement (40b) est pressée par un ressort (44), de préférence un ressort à boudin qui entoure la douille (41), contre la bride (41c), une deuxième bague de glissement séparée (43b) étant prévue entre le ressort (44) et la deuxième roue d'entraînement (40b), laquelle bague de glissement est connectée à la douille (41) de manière solidaire en rotation et déplaçable en longueur.

7. Transporteur à rouleaux selon la revendication 6, **caractérisé en ce que** le ressort (44) est supporté sur une butée (42) qui est fixée à la douille (41) de manière déplaçable en longueur.

8. Transporteur à rouleaux selon la revendication 7, **caractérisé en ce que** la butée (42) présente un filetage interne qui vient en prise dans un filetage extérieur (41e) sur la douille (41), entre le ressort (44) et la butée (42) étant prévue une troisième bague de glissement (43c) qui est connectée à la douille (41) de manière solidaire en rotation et déplaçable en longueur.

9. Transporteur à rouleaux selon l'une quelconque des revendications 5, 6 ou 8,
**caractérisé en ce que** la première bague de glissement (43a) et/ou la deuxième bague de glissement (43b) et/ou la troisième bague de glissement (43c) sont réalisées de manière identique.

10. Transporteur à rouleaux selon l'une quelconque des revendications précédentes,
**caractérisé en ce qu'**un module de palier séparé (36) est prévu, dans lequel est monté à rotation le module d'entraînement (40), le module de palier étant fixé de manière détachable au bâti (11).

11. Transporteur à rouleaux selon la revendication 10, **caractérisé en ce que** l'arbre d'entraînement (51) est fixé avec les modules d'entraînement (40) et les modules de palier séparés en tant que tout de manière détachable au bâti (11).

12. Transporteur à rouleaux selon l'une quelconque des revendications précédentes,
**caractérisé en ce qu'**au moins un moyen de positionnement (52) connecté de manière détachable à l'arbre d'entraînement (51) est prévu, lequel définit la position de l'arbre d'entraînement (51) par rapport à un module d'entraînement associé (40).

13. Transporteur à rouleaux selon l'une quelconque des revendications précédentes,
**caractérisé en ce que** tous les modules d'entraînement (40) sont réalisés de manière identique.

14. Transporteur à rouleaux selon l'une quelconque des revendications précédentes,
**caractérisé en ce que** les axes de rotation des rouleaux de transport (20) sont orientés perpendiculairement à l'axe de rotation de l'arbre d'entraînement (51), les première et deuxième roues d'entraînement (20b ; 40b) étant des roues dentées coniques.
